# EUROPÄISCHE PATENTANMELDUNG

(11) **EP 0 940 371 A2**
(43) Veröffentlichungstag der Anmeldung: **08.09.1999**
(21) Anmeldenummer: 99104282.1
(22) Anmeldetag: 03.03.1999
(51) Int. Cl.: C02F 3/20, B26F 1/00

(54) **Membranbelüftungsvorrichtung mit feinen Löchern und Locher für Lochung von Membran**

(30) Priorität: 03.03.1998 CN 98226099; 21.03.1998 CN 98226263
(71) Anmelder: Yixing Glass Fiber Reinforced Plastic Chemical Industry Equipment Factory, Yixing City, Gaocheng Town (CN)
(72) Erfinder: Wang, Tingrong, Yixing City, Gaocheng Town (CN); Wang, Jianda, Yixing City, Gaocheng Town (CN)
(74) Vertreter: Winter, Brandl, Fürniss, Hübner, Röss, Kaiser, Polte, Kindermann Partnerschaft

(57) **Zusammenfassung**

Die vorliegende Erfindung bezieht sich auf eine Membranbelueftungsvorrichtung mit feinen Loechern zur Sauerstoffzufuhr ins Wasser und einen verbesserten entsprechenden Belueflungsmembranlocher, dadurch gekennzeichnet, dass eine kugelabschnittsfoermige Gestaltung statt der plattenfoermigen Gestaltung von tellerfoermiger Belueftungsmembran und Membranhalteplatte angewandt ist und die in Zusammenwirken stehenden plattenfoermigen oberen und unteren Matrizen durch die in Zusammenwirken stehenden Vertiefungs-und Vorsprungsplattformkoerper ersetzt sind, und die Lochungsnadel als kegelfoermige Nadel mit flachen Messerschneide ausgebildet sind. Bei der erfindungsgemaessen Belueftungsvorrichtung kann erstens die Wassereinstroemung in die Belueftungsvorrichtung wirkungsvoll verhindert werden, zweitens ist solche Belueflungsvorrichtung fuer die Anwendung bei der Belueftung in kleiner Luftmenge geeignet, drittens kann die Ablagerung von Schlamm auf der Belueftungsmembran vermieden werden. So sind die Maengel bei der plattenfoermigen Belueftungsvorrichtung, wie Undichtigkeit, Wassereinstroemung in die Belueftungsvorrichtung u.s.w. aufgehoben, zusaetzlich ist der Belueftungswirkungsbereich erweitert, die Memobran ist beim Betrieb gleichmaessig belastet, so dass ihre Betriebsdauer verlaengert ist. Die erfindungsgemacsse Belueftungsvorrichtung ist sowohl fuer die Behandlung von Stadtabwasser und Industrieabwasser, als auch fuer die biochemische Behandlung von leicht verunreinigter Wasserquelle geeignet.

## Beschreibung

Die vorliegende Erfindung bezieht sich auf eine Membranbelueftungsvorrichtung mit feinen Loechern zur Ausbreitung von Luft im Wasscr bzw. im Abwasser und einen verbesserten Locher fuer Lochung von Membran.

In EP-0385198 und in CN-90214660.2 ist jeweils eine Membranbelueftungsvorrichtung mit feinen Loechern schon beschrieben. In EP-0385198 ist eine Membranbelueftungsvorrichtung bekannt, die aus einer tellerfoermigen Halteplatte, einem Anschluss zum Zufuehren des Belueftungsgases auf der Halteplatte und einer auf der Halteplatte aufgespannten elastischen Membran mit feinen Schlitzen besteht. In CN-90214660.2 ist eine Membranbeluefungssorrichtung mit feinen Loechern bekannt, wobei eine schalenfoermige Luftverteilungskammer zur Verbesserung der Gleichmaessikeit von Belueftung zusaetzlich unterhalb der plattenfoermigen Stuetzung vorgesehen ist. Diese beiden Membranbelueftungsvorrichtungen, sowie ihre Membran und entsprechende Stuetzungen von Membran sind alle plattenfoermig ausgebildet, und der entsprechende Locher von Membran besteht aus einer aehnliche Form von Membran aufweisenden plattenfoermigen unteren Matrize und oberen Matrize und auf der wirkenden Oberflaeche befestigten Lochungsnadeln, durch Strangpressen von der unteren und oberen Matrize sind feine Loecher durch senkrechte(n) Schnitt oder Lochung hergestellt. In der Praxis hat es gezeigt, dass die Ermuedung und Schlaffheit mit der Dauer des Betriebes bei solch einer Memobran auftritt, bei der plattenfoermigen Membran kann nicht gewaehrleistet werden, dass die Membran beim Beenden der Gaszufuhr fest an die Halteplatte anliegt, zusaetzlich kann bei dem(r) senkrechten Schnitt bzw. Lochung auch nicht gewaehrleistet werden, die Loecher vollstaendig zu schliessen. Dies fuehrt dazu, dass das Wasser beim Beenden der Gaszufuhr durch die feinen Loecher der Membran in die Belueftungsvorrichtung und Gaszufuhrleitung einstroemt, so dass die Beluefrungswirkung und der normale Betrieb von Belueftungsvorrichtung beeintraechtigt wird. Zum Verhinderen der Wassereinstroemung ist eine Sperreinrichtung am Gaszufuhraustritt der Belueftungsvorrichtung angeordnet, aber dies kann auch nicht vermeiden, dass das Wasser an die Stelle zwischen Membran und Halteplatte gelangt, diese Massnahme fuehrt ebenfalls auch dazu, dass der Belueftungswiderstand erhoeht und die Belueftungswirkung gesenkt wird, sowie die Energieaufnhahme erhoeht wird. Die zusaetzliche Anordnung der Sperreinrichtung selbst fuehrt auch zu der Erhoehung von Belueftungswiderstand und Energfiaufnahme. Ausserdem, da die plattenfoermige Memobran beim Betrieb aufschwellt und der Schnitt von feinen Loechern senkrecht angeordnet ist, ist die Ausbreitung der Luftblase bei der Belueftung nicht gleichmaessig, so dass sich die Luftblase im Zentrumbereich der Membran konzentriert und der Belueftungswirkungsbereich damit auch relativ klein ist, sowie die Luftblase oft gegeneinander zur Bildung von groesserer Luftblase stoesst und die Belueftungswirkung dadurch beeinflusst ist. Da auf der plattenfoermigen Membran die Loecher normalweise sehr dicht angeordnet sind und die Membran beim Betrieb in grossem Masse aufgeweitet ist, wird der im Wasser enthaltene Schlamm sehr leicht auf der Oberflaeche der Memobran ablagern, so wird oft Zerriss der Memobran bei der langen Dauer des Betriebes auftreten und wird die Betriebesdauer der Belueftungsvorrichtung dadurch beeintraechtigt. Da der Belueftungswiderstand bei der plattenfoermigen Membran sehr hoch ist, ist sie nicht in der Lage, den Bedarf an die Belueftung in kleiner Lutmenge zu decken. Durch alle oben erwaehnten Maengel ist die Verbreitung und die Anwendung von tellerfoermiger Membranbelueftungsvorrichtung in breitem Umfang nachteilig beeinflusst.

Der vorliegenden Erfindung liegt die Aufgabe zugrunde, die oben erwaehnten Maengel von Stand der Technik aufzuheben und eine Membranbelueftungsvorrichtung mit feinen Loechern anzugeben, wobei ihr Belueftungswiderstand gering ist, ihr Wirkungsbereich gross ist, die Einstroemung von Wasser in die Belueftungsvorrichtung beim Beenden der Gaszufuhr wirkungsvoll vermieden wird und die Ablagerung von Schlamm auf der Belueftungsvorrichtung erschwerend ist, sowie ihre Betriebdauer lang ist.

Und der vorliegenden Erfindung liegt noch die Aufgabe zugrunde, einen entsprechenden Locher fuer Lochung der genannten Membran anzugeben.

Die erste Aufgabe ist erfindungsgemaess dadurch geloesst, dass eine kugelabschnittsfoermige Gestaltung statt der plattenfoermigen Gestaltung von der tellerfoermigen Belueftungsmembran und ihrer Halteplatte verwendet ist. Genau gesagt, umfasst die erfindungsgemaesse Membraubelueftungsvorrichtung mit feinen Loechern eine elastische Belueftungsmembran mit feinen Loechern, eine Stuetzung fuer Belueftungsmembran und eine Gaszufuhrleitung fuer Belueftungsmembran, die auf der Stuetzung aufgespannt ist, dadurch gekennzeichnet, dass die genannte Belueftungmembran und ihre Stuetzung kugelabschnittsfoermig ausgebildet sind. Beim Betrieb gelangt die Druckluft ueber Zufuhrleitung an die Stelle zwischen Belueftungsmembran und Stuetzung. Unter Druck der Luft weitet die eigentlich fest an die Stuetzung anliegende Belueftungsmembran auf, trennt sich von der Stuetzung, und dabei wird ein Raum zur Verteilung der Luft gebildet, so dass sich die Druckluft ueber die auf der Membran vorgesehenen feinen Loecher gleichmaessig nach ausscn ausbreitet, wachrend nach dem Beenden der Gaszufuhr der Raum zwischen Belueftungsmembran und Stuetzung zur Verteilung der Luft nicht mehr vorhanden ist und die Belueftungsmembran unter Zusammenwirken von Wasserdruck und Elastizitaet von Membran selbst den Anfangszustand wiederherstellt und wieder fest an die Oberflaeche der Stuetzung anliegt.

Der Begriff "die erfindungsgemaesse kugelabschnittfoermige Gestaltung" bezieht sich auf alle Gestaltungen mit aehnlicher Form von Kugelabschnitt und schliesst auch bogenfoermige Gestaltung ein. In einer bevorzugten Ausbildung weist die kugelabschnittsfoermige elastische Belueftungsmembran am unteren Rand eine sich nach innen verengenden und nach unten erstreckenden Ring, so dass es guenstig ist, die Memobran auf der Stuetzung aufzuspannen. Bei den feinen Belueftungsloechern ist es vorteilhaft, wenn die Loecher als flachfoermige feine Loecher ausgebildet sind. Insbesondere ist es vorteilhaft, wenn die flachfoermigen feinen Loecher konzentrisch und miteinander versetzbar angeordnet sind, so dass der Belueftungswiderstand der Membran reduziert wird und der Bedarf an die Belueftung in kleiner Luftmenge auch dadurch gedeckt wird. Zur Verbesserung der Gleichmaessigkeit der Belueftung ist die Dichte von feinen Loechern vom Umfang der Memobran zum Zentrum nach und nach reduziert. Zur Erhoehung der Dichtigkeit von feinen Loechern beim Beenden der Gaszufuhr ist der Schnitt von flachfoermigen feinen Loechern bevorzugt mit Neigung angeordnet. Und schiefer Schnitt ist insbesondere vorzugsweise gegen Umfangsrichtung angeordnet. Da schiefer Schnitt miteinander versetzbar angeordnet ist, kann die Wassereinstroemung in die Belueftungsvorrichtung beim Beenden der Gaszufuhr wirkungsvoll verhindert werden. Der Gaszufuhraustritt der Belueftungsvorrichtung ist vorzugsweise am Kopf der kugelabschnittsfoermigen Stuetzung angeordnet. Der dem Austritt gegenueberliegende Bereich der Membran ist frei von feinen Belueftungsloechern, so dass es guenstig ist, die Wassereinstroemung beim Beenden der Gaszufuhr zu verhinden. Zwischen der Stuetzung am Umfang von Gaszufufuhraustritt und der Membran kann auch zusaetzlich eine Dichtung angeordnet werden, die durch Zusammenwirken von Vorsprung und Vertiefung gebildet ist, um die Wassereinstroemung in die Stelle zwischen der Belueftungsmembran und der Stuetzung noch wirkungsvoller zu verhindern. Um die Gleichmaessikeit der Luftverteilung zu verbessern, kann der Gaszufuhraustritt auch an der unteren Umfangsflaeche von Kugelabschnitt angeordnet werden. Die Verbindung der Belueftungsvorrichtung mit der Gaszufuhtleitung kann erfindungsgemaess mittels einer Hohlschraube (gleichzeitig auch als Luftstromweg) und kann auch durch einen Umfassring, wie zum Beispiel zwei miteinander formschluessig verbundene Halbringe, verwirklicht werden.

Die zweite Aufgabe ist erfindungsgemaess dadurch geloest, dass die plattenfoermige Gestaltung von oberer und unterer Matrize fuer Lochung durch eine plattformkoerperliche Gestaltung ersetzt ist, so dass sie dafuer geeignet ist, Loecher auf der kugelabschnittsfoermigen Belueftungsmembran herzustellen. Konkret gesagt, besteht der erfindungsgemaesse Belueflungsmembranlocher aus einer oberen Matrize, einer mit der oberen Matrize in Zusammenwirken stehenden unteren Matrize und auf der Oberflaeche der Matrize befestigten Lochungsnadeln, dadurch gekennzeichnet, dass die obere und untere Matrize als in Zusammewirken stehende Veritefungs-und Vorsprungsplattformkoerper ausgebildet sind, wobei die feinen Loecher mit schiefem Schnitt auf einer zwischen oberer und unterer Matrize gesetzten kugelabschnittsfoermigen Belueftungsmembran durch Strangpressen von oberer und unterer Matrize hergestellt werden koennen und die Wassersperrwirkung beim Beenden der Gaszufuhr dadurch auch verbessert ist ,

Die erfindungsgemaesse plattförnkoerperliche Matrize kann rundplattformkoerperlich ausgebildet werden, kann auch polyederplattformkoerperlich, wie hexaederplattformkoerperlich ausgestaltet werden. Da die Form von Rundplattformkoerper aehnlich der Form von kugelabschnittsfoermiger Membran ist, ist die rundplattformkoerperliche Gestaltung bevorzugt. Bei den in Zusammenwirken stehenden Vertifungs-und Vorsprungsplattformkoerpern von Matrizen kann die obere Matrize als Vertiefungsplattformkoerper und die untere Matrize als Vorsprungsplattformkoerper ausgebildet werden, ist es auch moeglich, die obere Matrize als Vorsprungsplattformkoerper und die untere Matrize als Vertiefungsplattformkoerper auszubilden. Es ist vorteilhaft fuer die Lochung, wenn die obere Matrize Vertiefungsplattformkoerper und die untere Matrize Vorsprungsplattformkoerper ist. In Bezug auf die Kegeligkeit von plattformkoerperlichen Matrizen betraegt der Winkel zwischen Generatrix (Oberflaeche) und horizontaler Ebene vorzugsweise 30 bis 45 Grad. In Bezug auf die Befestigung der Lochungsnadel auf der Matrize sind die Lochungsnadel bevorzugt auf der Wirkungsoberflaeche von der vorsprungsplattformkoerperlichen unteren Matrize befestigt. Die Lochungnadel stehen ungefaehr senkrecht zu der horizontalen Ebene, vorzugsweise mit einer leichten Neigung, sie koennen in Richtung zum Kopf von Formkoerper und auch gegen diese Richtung (zum Boden von Formkoerper) geneigt sein und schliessen einen Winkel von 75 bis 90 Grad mit der horizontalen Ebene ein. Die Nadel koennen als beliebige geometrische Fom, bevorzugt als flachfoermige oder rhobenfoermige Messerschneide ausgebildet weden. So kann sowohl die Kaltbearbeitung der feinen Loecher relativ leicht verwirklicht werden, als auch koennen die angefertigten feinen Loecher in flachfoermigem Schnitt ausgefuehrt werden, und der Bedarf an die Belueftung in kleiner Luftmenge kann dadurch gedeckt weden. Um die Festigkeit von Lochungsnadeln (Messerschneide) zu erhoehen, sind flachkegelfoermige Nadel bevorzugt, wobei der obere Teil duenner als der untere Teil ist. Die Lochungsnadel (Messerschneide) sind vorzugsweise konzentrisch und miteinander versetzbar in oberer und unterer Reihe auf der Oberflaeche der Matrize angeordnet. Um die bessere Positionierung bei der Bewegung von oberer und unterer Matrize zu erreichen, weisen die obere und untere Matrize Positionierungseinrichtung, beispielsweise eine in Zusammenwirken stehende Vertiefungs-und Vorsprungspositionierungseinrichtung auf.

Nachfolgend wird die vorliegende Erfindung an Hand von drei bevorzugten Ausfuehrungsbeispielen und Darstellung von einem Locher eingehend erlaeutert. Es zeigt
- Fig. 1: schematische Darstellung der Gestaltung von dem ersten Ausfuehrungsbeispiel;
- Fig. 2 und 3: schematische vergroesserte Darstellung der Gestaltung von dem oberen Teil des ersten Ausfuehrungsbeispieles und dem Schnitt von feinen Loechern mit verschiedenen Neigungen;
- Fig. 4: schematische Darstellung der Gestaltung von dem zweiten Ausfuehrungsbeispiel;
- Fig. 5: schematische Darstellung der Gestaltung von dem dritten Ausfuehrungsbeispiel;
- Fig. 6: schematische Darstellung der Gestaltung von dem Locher;
- Fig. 7: schematische Darstellung von einer flachfoermigen Lochungsnadel (Messerschneide) in Frontansieht und Seitenansieht.

### Ausfuehrungsbeispiel 1:

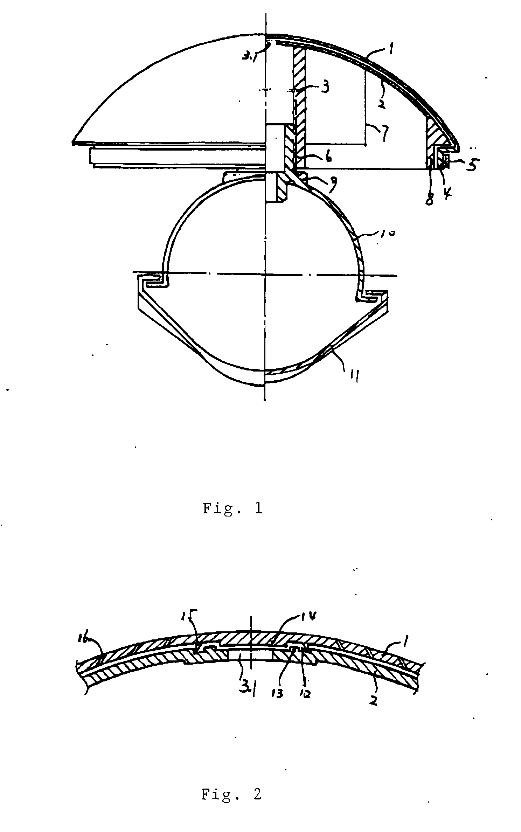

Wie in Fig.1 dargestellt, besteht die erfindungsgemaesse Belueftungsvorrichtung mit feinen Loechern aus einer kugelabschnittsfoermigen Stuetzung 2, einer an die Stuetzung anliegenden kugelabschnittsfoermigen Belueftungsmembran 1 aus Gummi und einer Gaszufuhrleitung 3. Die Gaszufuhrleitung 3 ist mittels Halteplatte 7 in der Mitte von der kugelabschnittsfoermigen Stuetzung befestigt, eine Gasaustrittsoeffnung 3.1 ist in der Mitte von dem oberen Teil der Stuetzung angeordnet, im unteren Teil der Gaszufuhrleitung ist eine Gewinde 6 zum Anschluss mit Gasversorgungsleitung vorgesehen. Der untere Teil von der kugelabschnittsfoermigen Stuetzung verengt sich und diese Verengung erstreckt sich nach unten zur Bildung eines Ringrandes 8, waehrend die Membran am unteren Rand auch eine Verengung aufweist, die sich nach unten zur Bildung eines Ringrandes 4 erstreckt, der mit dem Ringrand von der kugelabschnittsfoermigen Stuetzung zusammenwirkt, die Membran ist mittels eines Reifens 5 auf der kugelabschnittsfoermigen Stuetzung zur Bildung der Gasdichtung aufgespannt. Die Belueftungsvorrichtung ist mit Hielfe von ihrer inneren Gewinde 6 und einem Hohlschraubenbolzen mit Haltestueck verbunden, das aus einem formschluessig verbundenen oberen und unteren Halbrig 10, 11 besteht, mit Hielfe von Haltestueck ist die Belueflungsvorrichtung an der Gasversorgungsleitung befestigt und eine Gasverbindung ist mittels eines in die Gasversorgungsleitung gesteckten Gasrohres gebildet. Wie in Fig.2 gezeigt, ist in der Mitte von dem oberen Teil der Membranstuetzung eine geringfuegig tiefliegende Vertiefung 12 vorgesehen, in der ein vorspringender Ring 13 angeordnet ist, waehrend auf der Membran ein der Vertiefung entsprechender rundfoermiger Vorsprung 14 vorgesehen ist und ein vorspringender Ring 15 auf der Aussenseite von dem Vorsprung angeordnet ist, so dass eine Wasserdichtung zur Vermeidung der Wassereinstroemung in die Belueftungsvorrichtung unter Zusammenwirken von Vertiefung und Vorsprung gebildet ist. Die auf der Membran vorgesehenen feinen Belueftungsloecher (frei von Loechern im Zentrumbereich von dem oberen Teil des Kugelabschnitts) sind als flachfoermige Schnitte ausgestaltet, die in Umfangsrichtung von der Kugel mit Neigung in Winkel von 45 Grad mit der horizontalen Ebene angeordnet sind, wobei die flachfoermigen feinen Loecher um Zentrum auf der kugelabschnittsfoermigen Membran konzentrisch und miteinander versetzbar verteilt sind und die Dichte der feinen Loechern von Aussenumfang der Membran zum Zentrum nach und nach reduziert ist.

### Ausfuehrungsbeispiel 2:

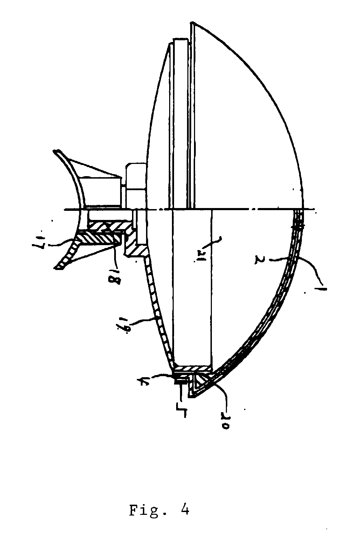

Wie in Fig.4 gezeigt, weist die kugelabschnittsfoermige Stuetzung 2 wie beim 1. Ausfuehrungsbeispiel im unteren Teil einen Innenringrand 20, mit dem ein schalenfoermiges Chassis 19 formschluessig verbunden ist, wobei ein Raum 21 zur Gasverteilung durch die Aufsteckung von der kugelabschnittsfoermigen Membranstuetzung und dem schalenfoermigen Chassis miteinander gebildet ist. Im Bodenteil von dem schalenfoermigen Chassis ist ein Hohlschraubenbolzen 18 angeordnet, mittels dessen und der Schraubenmutter 17 an der Gasversorgungsleitung die Belueftungsvorrichtung an der Gasversorgungsleitung befestigt ist, wobei der Hohlschraubenbolzen einerseits zur Befestigung der Belueftungsvorrichtung und anderseits auch als Kanal fuer Gaszufuhr der Belueftungsvorrichtung dient.

### Ausfuehrungsbeispiel 3:

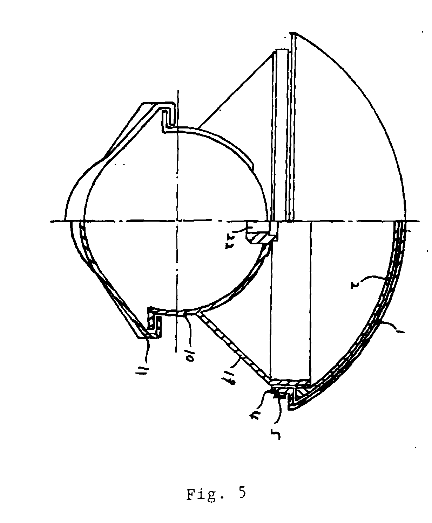

Wie in Fig.5 dargestellt, ist das schalenfoermige Chassis 19 mit dem oberen Halbring 10 formschlussig verbunden und weist in der Mitte eine Duese 22 auf, zwischen der und der Gasversorgungsleitung eine Luftverbindung hergestellt ist, wie bei dem zweiten Ausfuehrungsbeispiel beschrieben ist. Die Belueftungsevorrichtung ist mittels des miteinander formschluessig aufsteckbar verbundenen oberen und unteren Halbring 10, 11 an der Gasversorgungsleitung befestigt.

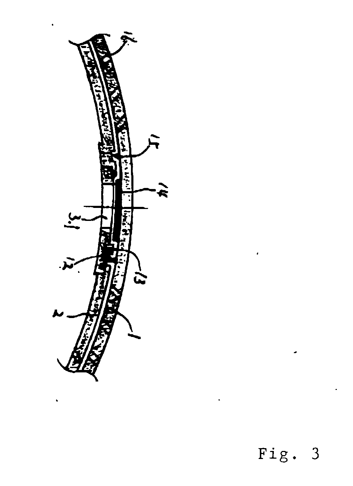

Wie in Fig. 3 dargestellt, koennen die flachfoermigen Schnitte von feinen Loechern der Belueftungsmembran gegen Umfangsrichtung angeordnet werden. Auf der kugelabschnittsfoermigen Stuetzung koennen auch mehr als eins Gasaustrittsoeffnungen vorgesehen werden, und zwar spiral mit Neigung angeordnet.

### Ausfuehrungsbeispiel 4:

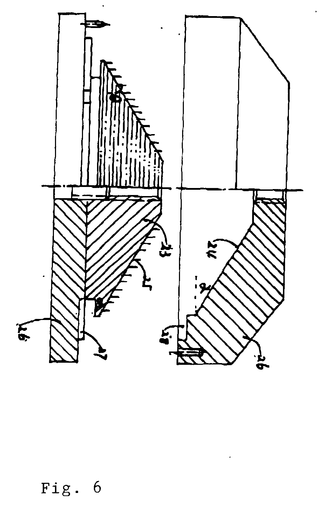

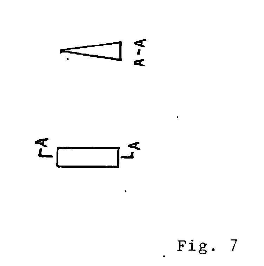

Wie in Fig. 6, 7 gezeigt, besteht der Locher einer in Zusammenwirken stehenden rundplattformkoerperlichen unteren Matrize mit Vorsprung 23 und oberen Matrize mit Vertiefung 24 und auf der vorspringenden Oberflaeche von der unteren Matrize befestigten Lochungsnadeln 25. Die Generatrix der Rundplattform (schiefe Ebene) schliesst einen Winkel α von 35 Grad mit der horizontaler Ebene ein. Die auf der Oberflaeche der unteren Matrize befestigten Lochungsnadel sind ungefaehr senkrecht zu der horizontalen Ebene, koennen leicht geneigt gegenueber Kopfteil ( oder Bodenteil) der Rundplattform angeordnet werden und schliessen einen Winkel β von 85 Grad mit der horizontalen Ebene ein. Wie in Fig. 7 gezeigt, sind die Lochungsnadel flachfoermig und zwar als kegelfoermige Messerschneide ausgestaltet, wobei die Dicke im oberen Teil der Messerschneide kleiner als die im unteren Teil ist, und sie sind konzentrisch und miteinander versetzbar auf der Oberflaeche der unteren Matrize verteilt. Die obere und untere Matrize sind jeweils auf der Grundplatte mit groesserem Mass befestigt. Die beiden Grundplatten weisen auf einander zugewandten Flaechen jeweils eine ringfoermige Positionierungsvorsprungsform 27 und eine entsprechende ringfoermige Positionierungsvertiefungsform 28 auf.

Da eine kugelabschnittsfoermige Gestaltung von Belueftungsmembran und Membranstuetzung bei der erfindungsgemaessen Belueflungsvorrichtung angewandt ist, kann es gewaehrleistet werden, dass die Belueftungsmembran beim Beenden der Gaszufuhr stets fest an die Membranstuetzung anliegt. Auch wenn die Membran durch Dauerbetrieb ermuedet und schlaff ist, kann die Membran fest an die Oberflaeche der Stuetzung anliegen. Zusaetzlich mit Hielfe von der Gaszufuhr am Kopfteil der Stuetzung und der mittels Zusammenwirken von Vorsprung und Vertiefung erreichten Dichtung wird die Gasaustrittsoeffnung nochmals gedichtet, so dass die Waasereinstroemung beim Beenden der Gaszufuhr voellig vermieden wird, so ist das Sperrungsverhalten beim Beenden der Gaszufuhr erheblich verbessert. Bei der erfindungsgemaessen kugelabschnittsfoermigen Gestaltung ist die Belueftungswirkung verbessert, wobei sich die Luftblase streubar ausbereitet, in grossem Bereich verteilt sind, so dass einerseits die Todzone zwischen Belueftungsvorrichtungen verringert ist und andererseits erschwerend ist, dass die Luftblase gegeneinander zur Bildung von groesserer Luftblase stoesst. Insbesondere bei dem erfindungsgemaessen schiefen Schnitt von feinen Loechern ist der Wirkungsbereich der Belueftung erweitert, und die Oeffnungsweite von Schnitt bei dem Betrieb sehr gering, so dass die Luftblase noch feiner ist und die Wirkung der Sauerstoffversorgung verbessert ist. Bei der erfindungsgemaessen kugelabschnittsfoermigen Gestaltung wird die Betriebsdauer der Membran verlaengert, wobei sich die Membran beim Betrieb weniger als bei der plattenformigen Gestaltung aufweitet und die ganze Membran gleichmaessig belastet ist, so dass ihre Dauerfestigkeit hoch ist und die Dichte der Oeffnungen auf der Membran auch damit reduziert werden kann und ihre Zerreissfestigkelt verbessert wird. Die kugelabschnittsfoermige Membran der vorliegenden Erfindung ist sehr guenstig fuer die schiefe Anordnung von Schnitt der feinen Loecher, so dass die Kontaktflaeche von Schnitt der feinen Loecher beim Schliessen vergroessert ist und das vollstaendige Schliessen der feinen Loecher dadurch erreicht ist, sowie die Widerstandsfaehigkeit gegen Wassereinstroemung gegenueber bei den senkrechen Schnitten von feinen Loechern erheblieh verbessert ist. Da der Belueftungswiderstand gering ist, kann auch der Bedarf an Belueftung in kleiner Luftmennge gedeckt werden, wobei ebenfalls die gleichmaessige Verteilung von Luftblase erreicht werden kann, so ist die erfindungsgemaesse Belueftungsvorrichtung auch fuer die Belueftung zur Behandlung von leicht verunreinigtem und kleine Menge von Sauerstoff verbrauchendem Wasser geeignet. Bei dem erfindungsgemaessen Locher ist eine Gestaltung von dem oberen und unteren Plattformkoerper der Matrize verwendet, wobei die Vorsprungsform mit der Vertiefungsform zusammenwirkt, solche Gestaltung ist nicht nur fuer die Lochung der kugelabschnittsfoermigen Membran geeignet, sondern ist auch sehr guenstig fuer die schiefe Anordnung von Schnitt der feinen Loecher, so ist es sehr vorteilhaft fuer die Verbesserung der Sperrungswirkung.

Bei der vorliegenden Erfindung sind nicht nur alle Maengel bei der tellerfoermigen Membran, wie die Membran bei Dauerbetrieb wegen Ermuedung und Schlaffheit nicht fest an die Halteplatte anliegen kann und sich die feinen Loecher nicht dicht schliessen koennen, und die Wassereinstroernung in die Belueftungsvorrichtung oft auftritt, aufgehoben, sondern der Belueftungswirkungsbereich auch erweitert ist und die Luftblase noch feiner ist, sowie die Belueftungswirkung erheblich verbessert ist; beim Beenden der Gaszufuhr ist es erschwerend fuer die Ablagerung von im Wasser enthaltendem Schlamm auf der Oberflaeche der Belueftungsvorrichtung, so dass der Widerstand bei der Inbetriebnahme der Belueftungsvorrichtung reduziert wird. Beim Betrieb kann sich die Membran in kleinem Masse aufweiten und die Dichte der Oeffnungen auf der Membran kann auch relativ reduziert werden und die Betriebsdauer wird dadurch verlaengert.

## Patentansprüche

1. Membranbelüftungsvorrichtung mit feinen Löchern, mit einer elastischen Belüflungsmembran mit feinen Löchern, einer Membranstützung und einer Gaszufuhrleitung für Belüftungsmembran, wobei die genannte Belüftungsmembran auf der Membranstützung aufgespannt ist, dadurch gekennzeichnet, daß die Belüftungsmembran und Membranstützung kugelabschnittsförmig ausgestaltet sind.

2. Membranbelüftungsvorrichtung mit feinen Löchern nach Anspruch 1, dadurch gekennzeichnet, daß unter der Membranstützung ein schalenförmiges Chassis vorgesehen ist, das mit der Membranstützung aufsteckbar verbunden ist.

3. Membranbelüftungsvorrichtung mit feinen Löchern nach Anspruch 1, dadurch gekennzeichnet, daß die feinen Löcher auf der Membran flachförmig ausgestaltet sind und ihre Schnitte mit Neigung angeordnet sind.

4. Membranbelüftungsvorrichtung mit feinen Löchern nach einem der Ansprüche 1-3, dadurch gekennzeichnet, daß zwischen dem oberen Teil von der Membranstützung und der Membran eine Dichtung vorgesehen ist, die durch Zusammenwirken von Vorsprung und Vertiefung gebildet ist.

5. Löcher für die Lochung der Belüftungsmembran nach Anspruch 1, mit einer oberen Matrize und einer mit der oberen Matrize in Zusammenwirkung stehenden unteren Matrize, sowie auf der Oberfläche der Matrize befestigten Lochungsnadeln, dadurch gekennzeichnet, daß die obere und untere Matrize als in Zusammenwirkung stehende Vertiefungs- und Vorsprungsplattformkörper ausgebildet sind.

6. Belüftungsmembranlocher nach Anspruch 5, dadurch gekennzeichnet, daß die Generatrix des Plattformkörpers einen Winkel von 30-45 Grad mit der horizontalen Ebene einschließt.

7. Belüftungsmembranlocher nach Anspruch 5, dadurch gekennzeichnet, daß die untere Matrize als Vorsprungskörper und die obere Matrize als Vertiefungskörper ausgebildet ist.

8. Belüftungsmembranlocher nach Anspruch 7, dadurch gekennzeichnet, daß die Lochungsnadel auf der Oberfläche von dem Plattformkörper der unteren Matrize befestigt sind.

9. Belüftungsmembranlocher nach Anspruch 5, dadurch gekennzeichnet, daß die Lochungsnadel als flachkegelförmige Körper ausgebildet ist, deren oberer Teil dünner als ihr unterer ist.

10. Belüftungsmembranlocher nach einem der Ansprüche 5 bis 9, dadurch gekennzeichnet, daß die Lochungsnadel einen Winkel von 75 bis 90 Grad mit der horizontalen Ebene einschließt.
